# EUROPEAN PATENT APPLICATION

(11) **EP 4 509 467 A1**
(43) Date of publication of application: **19.02.2025**
(21) Application number: 22927622.5
(22) Date of filing: 25.02.2022
(51) Int. Cl.: C02F 1/78, C02F 1/48, C02F 101/32, C02F 103/34

(54) **PROCESS FOR DEOILING WATER AND EFFLUENT, USES OF AN ELECTROMAGNETIC TREATMENT SUBPROCESS AND/OR A MICROBUBBLE GENERATION SUBPROCESS FOR OZONE DISSOLUTION, AND METHODS RELATIVE TO SAID USES**

(71) Applicant: Coelho Silton, Raimundo Nonato, 51170-590 Recife - PE (BR)
(72) Inventor: Coelho Silton, Raimundo Nonato, 51170-590 Recife - PE (BR)
(74) Representative: Regimbeau
(86) International application number: PCT/BR2022/050064
(87) International publication number: WO 2023/159283

(57) **Abstract**

The present invention discloses a process characterized by making use of up to three subprocesses: an oxidation subprocess using ozone for oxidation, an electromagnetic induction subprocess for the purpose of reducing the surface tension of the product to be treated and the vacuum formation subprocess for the purpose of promoting the dissolution of ozone. The disclosed process is intended to cause oxidation of oily products present in water and effluents, yielding water free of oily compounds as a product and the elimination of sulfides present.

## Description

### FIELD OF THE INVENTION

The present invention relates to a process for causing oxidation of oily products present in water and effluents, yielding water free of oily compounds as a product.

### BACKGROUND OF THE INVENTION

In oil production, there will always be a corresponding water production. Oil is associated with water at different ratios. In this sense, the water obtained during oil production needs to be deoiled (reduction of the Oil and Grease Content (OGC)) so that it can be returned to the environment.

This same issue of water contamination by oil is present in tank washing, both in the case of various vessels and in urban environments, where there are, for example, tanker trucks, gas stations, industrial effluents, etc.

In the past some options have been proposed to solve this issue.

The technological development in the field of reducing the Oil and Grease Content (OGC) of water obtained during oil production is known to be vast, with a series of documents addressing different types of technical solutions, such as:

WO2003091167 describes the development of hydrocyclone units to separate oil from water. However, while such a technology describes oil-in-water levels below 30 ppm, hydrocyclones are known to have a number of disadvantages. In particular, hydrocyclones remove free oil from water, while the oil remains dissolved in water. Furthermore, hydrocyclones can efficiently remove only oil droplets with a minimum size of 10 microns.

Document AU2015276141 concerns water treatment, in particular the treatment of wastewater on board of vessels, more particularly the provision of passenger ships, ferries, offshore platforms or barges with water purification means in order to reuse the water for various purposes or to effect subsequent external discharge in accordance with international standards and local regulations.

According to document AU2015276141, a facility for the treatment of waste water on board of vessels is allegedly provided, which comprises: at least one collection tank connected to a discharge for black water and grey water produced on board; a primary treatment unit comprising at least one band filter; a secondary treatment unit comprising at least one microfiltration or ultrafiltration filter; a tertiary treatment unit including at least one ozone treatment module; means for continuously feeding black water and grey water to at least one collection tank to said primary treatment unit; means for feeding filtrate from said primary treatment unit to said secondary treatment unit; and means for feeding the filtrate from said secondary treatment unit to said tertiary treatment unit.

However, document AU2015276141 neither describes nor suggests the elimination of the presence of oil in water.

Document US20070056913 describes an improved method for treating the contents of a wellbore reserve pit to make the contents safe for discharge or environmental reuse. The described method includes first passing the reserve pit contents through a preliminary solids separation process which produces a waste water stream from which large and heavy solid particles have been removed. Next, the waste water stream is passed through an ozonation pre-treatment process which coagulates contaminants in the waste water stream for more efficient removal in a subsequent flocculation step. After the ozonation step, the waste water is passed through a flocculation process to render the waste water of sufficient re-use quality for such tasks as equipment wash down and down hole fracturing operations.

However, document US20070056913 does not describe or suggest elimination of the presence of Oil and Grease Content (OGC) from the wastewater, nor does it refer to the treatment of dissolved oil or grease.

Therefore, they are of distinct natures and technologies with totally different applications, where, for example, the present invention eliminates the presence of oil and grease in the water transforming them into water and CO₂. Hydrocarbon decomposition through the new oxidation process as disclosed leaves no solid waste, leaves no liquid waste, leaves no gaseous waste and can eliminate up to 100% of the contaminating hydrocarbon regardless of the initial content of the process. To this end, there is only the need to increase the reaction time or increase the amount of ozone applied. The amount of ozone required to cause full oxidation of the hydrocarbon is easily calculated and to do this, one only needs to know the amount of contaminant in ppm and resize the reaction time.

Thus, unlike the state of the art, the inventors of the present invention based themselves on research and development, for example, of a water and effluent deoiling process that can comprise up to three (3) subprocesses, namely: (a) an advanced oxidation subprocess (AOP); and (b) an electromagnetic conditioning subprocess and/or (c) a microbubble formation subprocess for ozone dissolution depending on the oil and grease content to be treated.

In this sense, the inventors of the present invention have surprisingly found that in order to increase efficiency of the process of deoiling water and effluents, in addition to the advanced oxidation subprocess (AOP), the use of an electromagnetic conditioner causes reduction of surface tension of water, which allows a greater interaction of the ozone molecule with the hydrocarbon present and the formation of microbubbles that can occur through membranes or through vacuum generation, which will promote greater efficiency in the dissolution of ozone. This set of actions causes reduction of the water surface tension and, in effect, facilitates the oxidation reaction with ozone. One of the surprising advantages of the present invention is the application of electromagnetic conditioners that make the action of ozone on contaminants faster and the addition of ozone through vacuum to form microbubbles that will render the ozone more soluble.

### OBJECTS OF THE INVENTION

It is one of the objects of the present invention to provide a process for deoiling water and effluents.

It is also a particular object of the present invention to use ozone microbubbles and/or an electromagnetic conditioning to accelerate the ozone reaction in deoiling processes of water and effluents to reduce the water surface tension and provide, as a product, water free of oily compounds.

Another object of the present invention is to send back to the environment the water obtained during oil production, for example.

It is another object of the present invention to provide for the recovery of deactivated oil wells that still present between 10% and 30% of their productive capacity and were deactivated, for example, due to the high cost of treating the produced water. These wells can be reactivated due to the low cost of the treatment provided by the present invention.

It is another object of the present invention to provide treatment for water from domestic sewage and industrial effluents with the aim of reducing the organic load BOD and COD, as well as eliminating up to 100% of the presence of viruses, bacteria, fecal coliforms, algae and fungi.

Another objective of the present invention is the bacteriological treatment of food cooling water in meat, fish and poultry cold storage facilities, with a view, for example, to increasing the shelf life of food.

### BRIEF DESCRIPTION OF THE INVENTION

The present invention discloses:
A water and effluent deoiling process that can comprise up to three (3) subprocesses: an oxidation subprocess using ozone for oxidation, an electromagnetic induction subprocess, and a microbubble formation subprocess, wherein the last two subprocesses are intended to optimize the action of ozone as a form of oxidation and elimination of oil mixed with water through its transformation into water and CO₂ (carbon dioxide) as a result of the oxidation-reduction reaction promoted by ozone;
A water and effluent deoiling process comprising: (a) an advanced oxidation subprocess (AOP); and (b) a microbubble formation subprocess and/or (c) an electromagnetic conditioning subprocess for ozone dissolution;
Use of an electromagnetic conditioning subprocess and/or a microbubble generation subprocess to dissolve ozone, wherein it is in the deoiling of water and effluents together with an advanced oxidation subprocess (AOP);
A method for using an electromagnetic conditioning subprocess and/or a microbubble generation subprocess to dissolve ozone, wherein it is for deoiling of water and effluents together with an advanced oxidation subprocess (AOP);
It should be noted that in a non-exhaustive manner, the present invention is directed to the treatment of the most diverse types of effluents that contain organic matter, hydrocarbons, and microorganisms (viruses, bacteria, fungi or algae), which are susceptible to the oxidative action of ozone.

### BRIEF DESCRIPTION OF THE DRAWINGS

The present invention is described in more detail below.

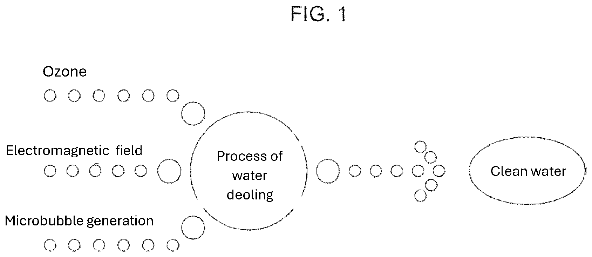

Figure 1 - is a description of the technique of up to three subprocesses of the invention, namely: Through a centrifugal pump adapted to a reaction tank the contaminated fluid passes through the piping containing an electromagnetic conditioning equipment and a microbubble generation system, or, for more efficient generation of microbubbles, a hydro-injector equipment that promotes vacuum by increasing the speed at a certain point within the piping. By expanding the fluid after the equipment that promotes an increased fluid speed, this generates vacuum that drags ozone from another piping coming from the ozone generators. The contaminated fluid and the already dissolved ozone are directed to the reaction tank where transformation of the contaminants takes place. Hydrocarbons are transformed into water and carbon dioxide, the organic salts are dissociated from the radical precipitating metal that will be subjected to decanting, hydrogen resulting from this organic salt reacts with the oxygen atom released from the ozone molecule designated (nascent oxygen) forming a Hydroxyl (OH) - which triggers a subsequent reaction with a greater oxidation-reduction potential than that of ozone itself. The set of subsequent reactions promotes full oxidation of hydrocarbons, reduction of the color of the treated fluid, and the complete sterilization from the microorganisms present.

Figure 1 depicts in detail (1) the Advanced Oxidation Process (AOP) using Ozone; (2) the electromagnetic conditioning of water using equipment developed for this purpose; and (3) the process of generating microbubbles for the full dissolution of ozone. Figure 1 depicts the three technologies applied together through three individual and separate pieces of equipment that complete the technology.

### DETAILED DESCRIPTION OF THE INVENTION

Due to limitations in the state-of-the-art technologies, it was necessary to develop a new technique as disclosed here.

For example, the technologies currently developed for the treatment of Produced Water (PW) or also designated "petroleum water" are basically: Decantation, Filtration, Hydrocyclones, Centrifugation. Filtration processes generate by-products that need to be discarded after saturation, the other processes have questionable efficiency, leading production companies to reduce production or even suspend this production in cases of treated water outside the specifications for disposal. Contrary to what has been previously disclosed in the state of the art, the present invention does not generate any solid waste, liquid waste, nor gaseous waste, and has as its main input electrical power and oxygen from atmospheric air.

The use of ozone as a powerful oxidant is known to be effective, with 100% of its oxidation-reduction potential being utilized. However, the present invention provides up to three subprocesses which, as disclosed herein and preferably together, achieve maximum efficiency in the oxidation of oily compounds and organic compounds, whether color-forming or not, as well as efficiently eliminating all presence of microbial organisms, composed of viruses, bacteria, algae and fungi and also eliminating all sulfur derived gaseous compounds.

Furthermore, gaseous effluent treatments to eliminate sulfides and other sulfur derived gases can, and should, use ozone. In cases of gaseous effluents, electromagnetic induction is not usually applied due to the absence of liquid, nor are vacuum generators applied due to the ease of mixing ozone gas with sulfur derived gases. This mixture of the two gases results in the elimination of both, and sulfur derived gases do not coexist in the presence of ozone. In the case of treating urban effluents that have low "hardness" water, the use of electromagnetic conditioners can be dispensed with, the use of electromagnetic conditioners enhances the action of ozone, which reduces the need for ozone loading in large volumes of "light" water of low hardness.

The advanced oxidation process (AOP) oxidizes the oil and grease present in water, transforming them into carbon dioxide and water, definitively eliminating their presence. The AOP is based on a mixture of ozone with its oxygen variants due to its natural instability, usually containing other gases, such as nitrogen and argon. Eventually, the AOP can be based only on the reaction of ozone and hydroxyl (OH) formed after the reaction of ozone with hydrocarbon in the case of the treatment of water produced from petroleum and with organic salts from domestic sewage, industrial effluents, leachate in landfills.

For the oxidation process to occur efficiently, an electromagnetic field is introduced into the environment, preferably through equipment that promotes alignment of the molecules of salts present in water, causing these salts and organic compounds under the effect of the electromagnetic field to be arranged unidirectionally according to their polarity.

Such an alignment results in a reduced surface tension of the water, enabling a greater capacity for dissolving ozone and consequent oxidation. Eventually, for non-heavy/hard water (with low calcium and magnesium salt content) use of the above sub-process (electromagnetic conditioning) can be dispensed with.

For this dissolution of electromagnetically conditioned water with ozone to occur more efficiently, it is carried out under conditions of formation of microbubbles generated through vacuum or other microbubble generating equipment (the smaller the bubble formed, the more efficient the process), for example, by equipment coupled to the recirculation pipe. This equipment increases speed of the fluid during its passage to promote the dragging of ozone. Expansion of this fluid inside the pipe causes dissolution. For this application, hydro-injector equipment coupled to the pipeline is used, or multi-jet equipment arranged on a barometric discharge column that provides an even greater vacuum.

Accordingly, all the ozone applied in the process will have reacted with the hydrocarbons present, hence promoting elimination of the presence of oil in the water. Always considering the quality of the water to be treated in relation to "hardness", "BOD" and "COD" organic contaminants for adjustments of the amount of ozone, electromagnetic field and microbubble generation.

A preferred embodiment of the present invention is implemented according to the general description with all its subprocesses, namely, a water and effluent deoiling process that can comprise up to three (3) subprocesses: (a) an oxidation subprocess using ozone for oxidation, (b) an electromagnetic induction subprocess, and (c) a microbubble generation subprocess using vacuum or other efficient device that produces microbubbles, wherein the last two subprocesses aim to optimize the performance of ozone as a form of oxidation and elimination of oil mixed with water.

It is worth noting that the up to three (3) subprocesses of the present invention may preferably be combined with each other, wherein the subprocess of step (b) above may adjust the power of the electromagnetic field generated according to the increase or reduction of the oil and grease content "OGC" of the water to be treated. Both subprocesses of electromagnetic conditioning of water and the greater efficiency in the formation of ozone microbubbles are preferred in the functioning of the deoiling process, and the electromagnetic conditioning process becomes necessary due to the "hardness" of the water to be treated, since the electromagnetic waves act on the alignment of the molecules of salts present in the water according to the polarity, aligning them by polarity in the form of needles, positive on one side and negative on the other side and, hence reducing the surface tension of the water.

Since there exist water with different salt contents, that is, with different surface tensions, this subprocess can only be suppressed for the treatment of certain types of water that have low "hardness" (contaminated light waters).

In other words, the condition of the advanced oxidation subprocess (a) using ozone is associated with subprocess (b), which promotes the formation of an electromagnetic field for the electromagnetic conditioning of water, reducing its surface tension and promoting a linear alignment of the molecules of the salts present therein with positive and negative electrical charges at each end (needle shape), enabling a greater reaction speed of the ozone with the contaminants that need to be eliminated; it is also associated with subprocess (c) of applying equipment installed in line with the objective of producing microbubbles and dissolving ozone in the water to be treated.

Another preferred embodiment of the present invention is implemented in the cleaning of petroleum produced water. During the production process, the oil produced is known to mixed with water. In new oil wells, this ratio is up to 30% water and 70% oil. As the well ages, the volume of water increases and can reach 70% to 80% of the water present. Part of the produced water is injected directly into the well in order to balance the well pressure; part of this water is treated on the platform itself by other centrifugation processes, membrane separation processes, filtration processes, hydrocyclone processes, and so on.

All processes currently used on platforms and also in onshore fields generate liquid or disposable waste that needs to be removed. The present invention uses only the oxygen present in atmospheric air, its transformation into ozone and electrical power, without generating any solid waste, liquid waste or gaseous waste.

Ozone generating equipment uses oxygen from atmospheric air, the oxygen being present in a ratio of 20.8% oxygen, 78% nitrogen, 0.2% argon, traces of CO₂, at sea level. To optimize the efficiency of ozone generators, oxygen generators can also be used using PSA (Pressure Swing Adsorption) technology, which produces oxygen at a concentration of up to 95%, or refrigerated Liquid Oxygen (liquid oxygen) can be used, which is supplied in cryogenic tanks at a concentration of up to 99.5% oxygen. The degree of oxygen concentration applied to ozone generators will affect the energy consumption of this ozone generator. The more concentrated the oxygen, the more ozone per cubic meter of oxygen applied will be produced. The other gases present in the atmosphere, Nitrogen, Argon, CO₂, are not oxidizing and do not interfere in the oxidation process.

The process step now presented is adapted to the oil production site and the equipment necessary to apply the process. First, the contaminated water must be placed in a container for storing contaminated raw water. A centrifugal pump for recirculating contaminated water is fitted to this container. An electromagnetic conditioner is adapted to the discharge piping of this recirculation pump to promote reduction of the water surface tension and facilitate the oxidation reaction with ozone; this electromagnetic conditioner only increases the efficiency of the process. The electromagnetic conditioner is designed to produce an electromagnetic field with variable power depending on the water to be treated.

In this same piping, an equipment is adapted to promote the formation of microbubbles, among others, the hydro injector to provide the vacuum that dissolves ozone in the water. In instances where a vacuum with greater capacity is required, multi-jet equipment adapted to a barometric column at the multi-jet outlet is designed, which water column promotes an increase in the vacuum produced by the multi-jet equipment. In simpler cases, the microbubble can be formed through membranes or porous stones arranged at the ends of the pipes.

The process consists of subjecting contaminated water to the oxidation process in a reaction tank for the time required to reduce the Oil and Grease Content (OGC) present to zero. OGC measurement is carried out by specialized laboratories that determine the oil and grease content present in the water with readings in ppm, or through electronic OGC measurement equipment designated ODME (Oil Discharge Monitoring Equipment) available on the market, which uses light refraction technology in a prism to read the presence of oil. Furthermore, another technology applied by oil producing companies to read the OGC is gravimetric technology, which reliably indicates the oil and grease content present in Petroleum Water PW with readings in ppm.

This process also eliminates sulfides and other sulfur derivatives from Produced Water (PW) or as it is simply called "petroleum water".

It is known that when the cost of the treatment of this produced water is close to the price of a barrel of oil, the well becomes unviable and, therefore, closed. In other words, oil is always related to water. The amount of oil related to the amount of water extracted from the well and the costs of treating this water indicate the well viability.

The treatment process for removing the oil and grease content (OGC) from water, as now disclosed, can be applied directly to Offshore or Onshore oil production platforms so as to avoid contamination of the environment with possible leaks and, mainly, reduce the path the water travels to treatment stations on the continent to the existing Effluent Treatment Stations (ETS).

One of the preferred embodiments of the invention is implemented in Oil Production Platforms (Offshore and Onshore) and in companies that store the oil produced in order to eliminate the presence of Sulphides both in the environment and storage tanks and in the PW (Produced Water). This PW is constantly emanating gases originating from the decomposition of organic matter and which are easily eliminated in the presence of ozone.

Oil is produced through the transformation of organic matter by bacteria that have existed for thousands of years in a transformation process considered infinite. During the production and extraction of oil and water produced, the combustible gases present are removed and the water is contaminated with sulfides generated by bacteria during the transformation of organic matter into oil. These sulfur-based gases are extremely harmful and detrimental to health and the quality of the produced oil.

In processes of injecting the produced water PWto return this water to the interior of the extraction well, this water is contaminated with SRB (Sulfate Reducing Bacteria), which bacteria need to be eliminated prior to injection of PW into the well, one of the measures for their elimination and, also, with the aim of increasing pressure of the well. Contaminated water increases acidity of the oil, hence reducing its quality. Through the present invention, the presence of bacteria is eliminated and the investment costs in the treatment of this injection water are reduced.

Therefore, during the step of treatment of the produced water, ultrafiltration membranes are used to remove the sulfide present before injecting the water into the well (part of the production process). Ultrafiltration membranes are expensive to purchase and generate solid waste for their disposal, ships are required to transport and dispose of these membranes in landfills.

At this stage of the process, the equipment necessary for its application is adapted to the oil production site. First, the contaminated water is placed in a container for storing contaminated raw water. A centrifugal pump for recirculating water is fitted to this container. An electromagnetic conditioner is adapted to the discharge piping of this recirculation pump to promote reduction of the water surface tension and facilitate the oxidation reaction with ozone; this electromagnetic conditioner increases the efficiency of the process. When contaminated water passes through an electromagnetic field specially designed for this purpose, it will provide an alignment of the molecules of the salts present according to their "polarity" positive on one side and negative on the other side, in the shape of needles. This arrangement of the molecules of the salts present reduces the water surface tension, enabling a faster reaction of ozone.

In this same piping, a hydro-injector equipment is adapted to produce the vacuum that will generate ozone microbubbles allowing for a better dissolution of ozone in water. The process consists of subjecting contaminated water to the oxidation process for the time required to zero the OGC present and eliminate Sulfides and other sulfur derivatives.

The present invention, as disclosed and described herein, eliminates 100% of the presence of Sulfide and sulfur derivatives from water, allowing a great reduction in costs with the purchase of new membranes and disposal of saturated membranes.

Another preferred embodiment of the invention is implemented in existing Oil Refineries for the treatment of wastewater with the aim of eliminating the presence of Oil and Grease Content (OGC) and sulfide, which is a harmful gas with high lethality for employees of companies in the oil and gas field in the various processes where there is contamination of water by oily products.

An additional preferred embodiment of the invention is implemented in Urban and Non-Urban Gas Stations with the aim of treating and eliminating oil present in the water used to wash floors or in the rainwater that washes large areas of gas stations.

The legislation already provides for the collection of washing water and rainwater from this type of fuel commercialization sites; this water must be stored in separation boxes and subsequently transported for treatment. Using the invention, through small equipment that eliminates the presence of hydrocarbons in the waters of this segment, the risks of environmental contamination are reduced.

Another embodiment of the present invention is implemented without carrying out the third subprocess, namely a vacuum for dissolving ozone. Although it leads to higher costs, the invention is still a viable and surprisingly advantageous technical process.

A preferred embodiment of the present invention is implemented according to the general description, with all its subprocesses, namely, a water and effluent deoiling process that can comprise all three (3) subprocesses: an oxidation subprocess using ozone for oxidation, an electromagnetic induction subprocess, and a microbubble formation subprocess.

The aforementioned preferred embodiment also has the purpose of eliminating sulfides, or simply eliminating sulfides as part of the variables that participate in the process of optimizing the implementation of the invention. The sulfides present in PW are also present in wastewater from industrial processes, and are also present in 100% of sewage wastewater, promoting the characteristic "sewage" odor that contaminates urban environments and can be 100% eliminated with the use of the invention now disclosed.

Although the invention is described in terms of the ideal conditions for use of the present technology, the invention may be practiced with modifications. That is, the preferred embodiments of the present invention are illustrative only and are not restrictive in nature.

Examples of preferred embodiments of the present invention are:
1. A water and effluent deoiling process comprising: (a) an advanced oxidation subprocess (AOP); and (b) an electromagnetic conditioning subprocess and/or (c) a microbubble formation subprocess for ozone dissolution.
2. The water and effluent deoiling process of embodiment 1, further comprising controlling the degree of oxygen concentration in the ozone production process.
3. The water and effluent deoiling process of embodiment 1, comprising in the use of ozone as an oxidant, using vacuum to dissolve ozone.
4. The water and effluent deoiling process of embodiment 1, wherein the vacuum amounts to dissolve ozone and electromagnetic induction are adjusted according to the characteristics of the water to be treated in terms of Sulfide Content, Oil Content, Grease Content.
5. The water and effluent deoiling process of embodiment 1, comprising: (a) an advanced oxidation subprocess (AOP) and (b) an electromagnetic conditioning subprocess.
6. The water and effluent deoiling process of embodiment 1, comprising: (a) an advanced oxidation subprocess (AOP) and (c) a microbubble generation subprocess to dissolve ozone.
7. The water and effluent deoiling process of embodiment 1, comprising: (a) an advanced oxidation subprocess (AOP); (b) an electromagnetic conditioning subprocess; and (c) a microbubble formation subprocess to dissolve ozone.
8. The water and effluent deoiling process of embodiment 1, further comprising eliminating simultaneously the Oil and Grease Content (OGC) and sulfides with a combination of ozone and additional gases.
9. Use of (a) an electromagnetic conditioning subprocess and/or (b) a microbubble generation subprocess for ozone dissolution, wherein the use is to deoil water and effluents together with an advanced oxidation subprocess (AOP).
10. Use of embodiment 9, wherein the electromagnetic conditioning and the generation of microbubbles for dissolving ozone are carried out separately or sequentially to the advanced oxidation subprocess (AOP).
11. A method for using an electromagnetic conditioning subprocess and/or a microbubble formation subprocess to dissolve ozone, wherein it is in the deoiling of water and effluents together with an advanced oxidation subprocess (AOP).
12. The method of embodiment 11, wherein the electromagnetic conditioning and the microbubbles generator for dissolving ozone are carried out separately or sequentially to the advanced oxidation subprocess (AOP).

### EXAMPLES AND TESTS

The characterization of several preferred embodiments of the present invention is described in the following examples, demonstrating the effects developed by the present invention.

### EXAMPLE 1

Treatment of PW (water produced from petroleum) through the AOP associated with equipment that generates an electromagnetic field to reduce the surface tension of water and using equipment that generates microbubbles, with the aim of eliminating the presence of oil and grease content and the content of sulfides and other sulfur derived gases, where the result is the full decontamination of the water proven through measurements in specialized laboratories with reading of the oil and grease content of the water and reading of the sulfide content close to zero or with readings demonstrating zero OGC and sulfide content.

### EXAMPLE 2

Treatment of wastewater in refineries, treatment of tank washing water in ships and treatment of tank washing water in oil storage companies through the AOP associated with equipment that generates an electromagnetic field to reduce the water surface tension and using equipment that enables the generation of vacuum (at negative pressures) approaching absolute vacuum, with the aim of eliminating the presence of oil and grease content and the content of sulfides and other sulfur derived gases, where the result is the full decontamination of the water proven through measurements in specialized laboratories with readings of the oil and grease content of the water and readings of the sulfide content close to zero or readings demonstrating zero OGC and sulfide content.

Having described examples of preferred embodiments, it should be understood that the scope of the present invention encompasses other possible variations, being limited only by the content of the appended claims, including any possible equivalents thereof, such as treatment of floor washing water in gas stations, treatment of industrial effluents in refrigeration industries that have a large load of sulfides in the liquid effluents, treatment of sewage water in condos and cities, treatment of gases emanating from stabilization ponds in dairy industries and the like.

## Claims

1. A water and effluent deoiling process, **characterized in that** it comprises: (a) an advanced oxidation subprocess (AOP); and (b) an electromagnetic conditioning subprocess and/or (c) a microbubble formation subprocess for ozone dissolution.

2. The water and effluent deoiling process of claim 1, **characterized in that** it further comprises controlling the degree of oxygen concentration in the ozone production process.

3. The water and effluent deoiling process of claim 1, **characterized in that** it comprises, in the use of ozone as an oxidant, using vacuum to dissolve ozone.

4. The water and effluent deoiling process of claim 1, **characterized in that** the vacuum amounts to dissolve ozone and electromagnetic induction are adjusted according to the characteristics of the water to be treated in terms of Sulfide Content, Oil Content, Grease Content.

5. The water and effluent deoiling process of claim 1, **characterized in that** it comprises: (a) an advanced oxidation subprocess (AOP) and (b) an electromagnetic conditioning subprocess.

6. The water and effluent deoiling process of claim 1, **characterized in that** it comprises: (a) an advanced oxidation subprocess (AOP) and (c) a microbubble generation subprocess to dissolve ozone.

7. The water and effluent deoiling process of claim 1, **characterized in that** it comprises: (a) an advanced oxidation subprocess (AOP); (b) an electromagnetic conditioning subprocess; and (c) a microbubble formation subprocess to dissolve ozone.

8. The water and effluent deoiling process of claim 1, **characterized in that** it further comprises eliminating simultaneously the Oil and Grease Content (OGC) and sulfides with a combination of ozone and additional gases.

9. Use of (a) an electromagnetic conditioning subprocess and/or (b) a microbubble generation subprocess for ozone dissolution, **characterized in that** it is to deoil water and effluents together with an advanced oxidation subprocess (AOP).

10. Use of claim 9, **characterized in that** the electromagnetic conditioning and the generation of microbubbles for dissolving ozone are carried out separately or sequentially to the advanced oxidation subprocess (AOP).

11. A method for using an electromagnetic conditioning subprocess and/or a microbubble formation subprocess to dissolve ozone, **characterized in that** it is in the deoiling of water and effluents together with an advanced oxidation subprocess (AOP).

12. The method of claim 11, **characterized in that** the electromagnetic conditioning and the microbubble generator for ozone dissolution are performed separately or sequentially to the advanced oxidation subprocess (AOP).
